# EUROPEAN PATENT APPLICATION

(11) **EP 1 193 889 A2**
(43) Date of publication of application: **03.04.2002**
(21) Application number: 01121263.6
(22) Date of filing: 05.09.2001
(51) Int. Cl.: H04B 1/38, H04M 1/02

(54) **Portable information device**

(30) Priority: 27.09.2000 JP 2000294312
(71) Applicant: Kabushiki Kaisha Toshiba, Minato-ku, Tokyo 105 (JP)
(72) Inventor: Matsumoto, Yasuo, Minato-ku, Tokyo 105-8001 (JP)
(74) Representative: Henkel, Feiler, Hänzel

(57) **Abstract**

A mobile telephone set comprises a device main body (1) having a pack receiving section (2) and a battery pack (3) adapted to be removably fitted to the pack receiving section (2). A card storage section (8, 81, 82, 83) for storing a card-shaped electronic device (10) is formed at least one of on the inner surface (2a) of the pack receiving section (2) facing the battery pack (3) and the inner surface (3a) of the battery pack (3) facing the pack receiving section (2).

## Description

This invention relates to a portable information device that may be a notebook type personal computer, a PAD, a mobile telephone set, or a PHS. More particularly, the present invention relates to a portable information device to which a card-shaped electronic device can be fitted.

A mobile telephone set normally comprises a main body and a battery pack. The battery pack is removably fitted to the pack receiving section of the main body. In recent years, mobile telephone sets adapted to receive and carry a thin and flat card-shaped electronic device have been marketed. Such mobile telephone sets are becoming popular these days.

With such a mobile telephone set, a card-shaped electronic device is put into a slot formed in the battery pack. Then, as the card-shaped electronic device is inserted repeatedly, the connection terminal of the card becomes worn and the problem of defective connection can arise. Additionally, the battery pack needs to be provided with a mechanism for holding the card-shaped electronic device in and releasing it from the slot. Such a mechanism inevitably occupies a space in the battery pack to hinder the efforts for reducing the size and the weight of mobile telephone sets. Additionally, the card-shaped electronic device can undesiredly come out and fall down from the slot due to vibrations and/or an impact. As the card-shaped electronic device falls down, the data stored in it can be lost.

Therefore, the object of the present invention is to provide a portable information device of the type under consideration that is free from the problem of a worn connection terminal if the card-shaped electronic device is fitted to and removed from it repeatedly and that of a fallen card-shaped electronic device and the resultant loss of stored data.

According to the invention, the above object is achieved by providing an electronic device comprising:
a device main body having a receiving section; and
an annex removably fitted to the receiving section;
the device being adapted to receive a card-shaped electronic device;
at least the first surface of the receiving section of the device facing the annex fitted to the receiving section or the second surface of the annex facing the first surface being provided with a recessed storage section for removably storing the card-shaped electronic device.

In another aspect of the invention, there is provided a portable information device comprising:
a device main body adapted for radio communications and having a pack receiving section; and
a battery pack removably fitted to the pack receiving section;
the device being adapted to receive a card-shaped electronic device;
at least the first surface of the pack receiving section of the device facing the battery pack fitted to the pack receiving section or the second surface of the battery pack facing the first surface being provided with a recessed storage section for removably storing the card-shaped electronic device.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a schematic rear view of an embodiment of the invention realized in the form of a mobile telephone set;
FIG. 2 is a lateral view of the mobile telephone set of FIG. 1;
FIG. 3 is a lateral view of the mobile telephone set of FIG. 1 from which the battery pack is removed;
FIG. 4 is a rear view of the mobile telephone set of FIG. 3;
FIG. 5 and FIG. 6 are partially cut away schematic sectional views of the mobile telephone set of FIG. 1, illustrating how the battery pack is removably fitted to the device main body;
FIG. 7 is a schematic plan view of the battery pack of the mobile telephone set of FIG. 1, illustrating the inner surface thereof provided with a card storage section;
FIG. 8 is a schematic plan view of the card-shaped electronic device fitted to the card storage section of FIG. 7;
FIG. 9 is an exploded schematic perspective view of the mobile telephone set of FIG. 1, illustrating how the card-shaped electronic device and the battery pack are fitted in position;
FIG. 10 is a schematic perspective view of another embodiment of the invention realized in the form of a mobile telephone set, where the card storage section is formed on the inner surface of the pack receiving section of the device main body;
FIG. 11 is a schematic perspective view of still another embodiment of the invention realized in the form of a mobile telephone set, where the card storage section is formed on both the inner surface of the battery pack and the inner surface of the pack receiving section;
FIG. 12 is a schematic perspective view of still another embodiment of the invention realized in the form of a mobile telephone set, where a card storage section is formed on the inner surface of the battery pack and the battery pack and the card-shaped electronic device are electrically connected;
FIG. 13 is a schematic perspective view of still another embodiment of the invention realized in the form of a mobile telephone set and adapted to store a card-shaped electronic device having a modified profile in the card storage section of the battery pack; and
FIG. 14 is a schematic perspective view of still another embodiment of the invention realized in the form of a mobile telephone set, where a card storage section is formed on the inner surface of the battery pack and the battery pack and the card-shaped electronic device are electrically connected.

Now, the present invention will be described in greater detail by referring to the accompanying drawing that illustrates preferred embodiments of the invention. The embodiments of electronic device or portable information device are realized in the form of so many mobile telephone sets.

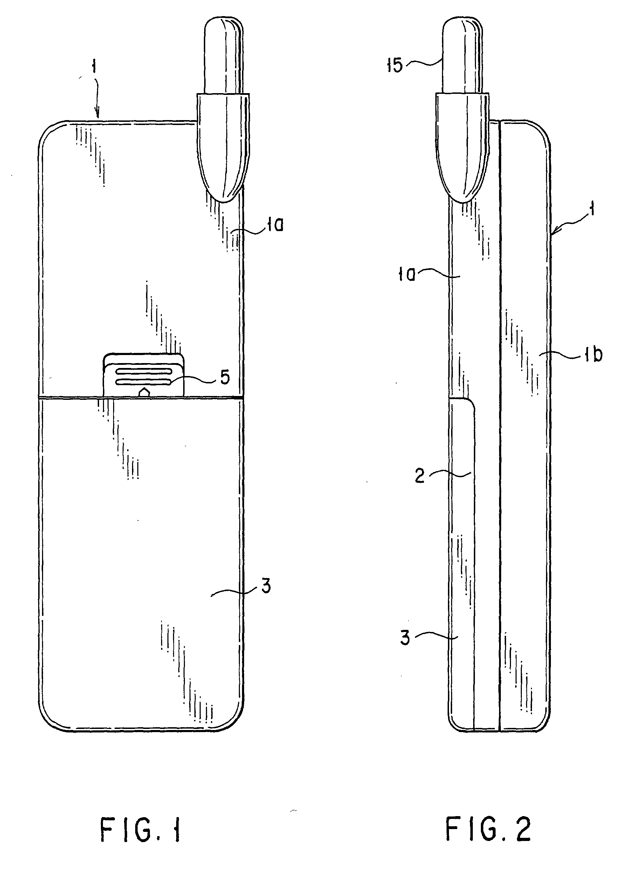

Referring to FIGS. 1 and 2 showing the first embodiment of the invention realized in the form of a mobile telephone set, the embodiment comprises a device main body 1 having a radio communication feature and an annex that is a battery pack 3. The device main body 1 has a base 1a and a cover 1b. A pack receiving section 2 is formed in the base 1a to receive a battery pack 3. The battery pack 3 contains therein a battery (not shown) which may be of the accumulation type or of the charge type.

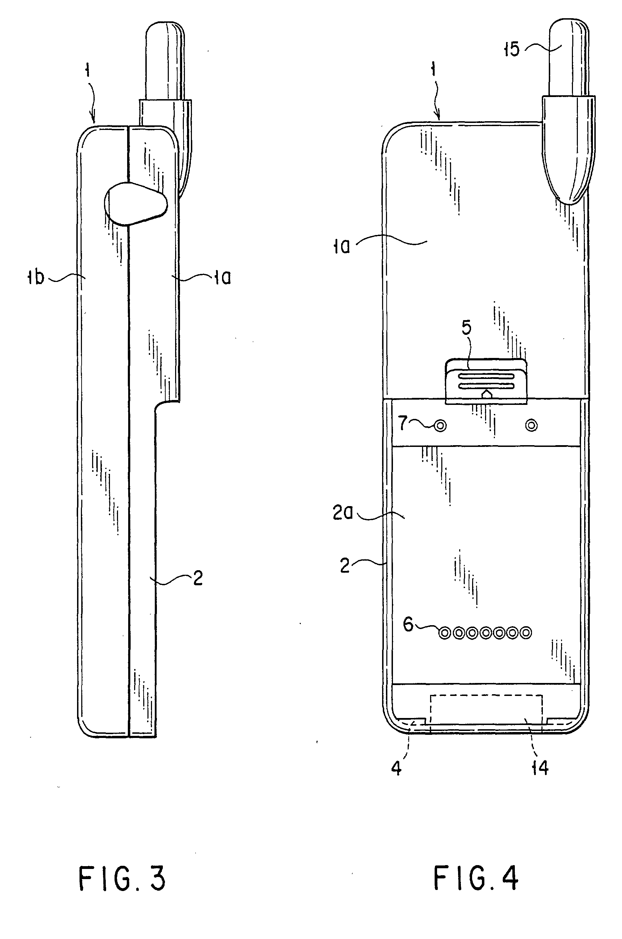

Referring now to FIG. 4, the pack receiving section 2 is provided with a pair of engaging sections 4 for engaging the lower end of the battery pack 3 with the lower end of the pack receiving section 2 and an anchor claw 5 for rigidly anchoring the upper end of the battery pack 3 to the upper end of the pack receiving section 2. The anchor claw 5 is so arranged as to be slidable between a fixed position where it engages the upper end of the battery pack 3 received in the pack receiving section 2 and a release position where it releases the battery pack 3. It is urged to the fixed position by means of a spring (not shown).

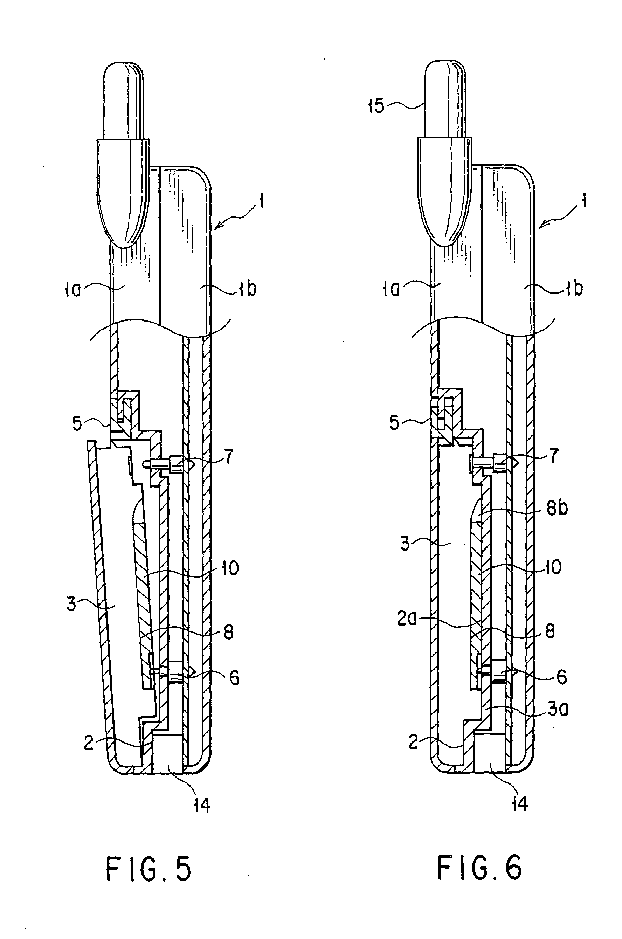

For putting the battery pack 3 into the pack receiving section 2, the lower end of the battery pack 3 is brought into engagement with the engaging sections 4 as shown in FIG. 5 and turned around the engaging sections 4 to the position shown in FIG. 6 until the upper end of the battery pack 3 is rigidly held by the anchor claw 5. For conversely taking out the battery pack 3 from the pack receiving section 2, the anchor claw 5 is driven to move to the release position and release the engagement and then the lower end of the battery pack 3 is taken out of the engaging sections 4.

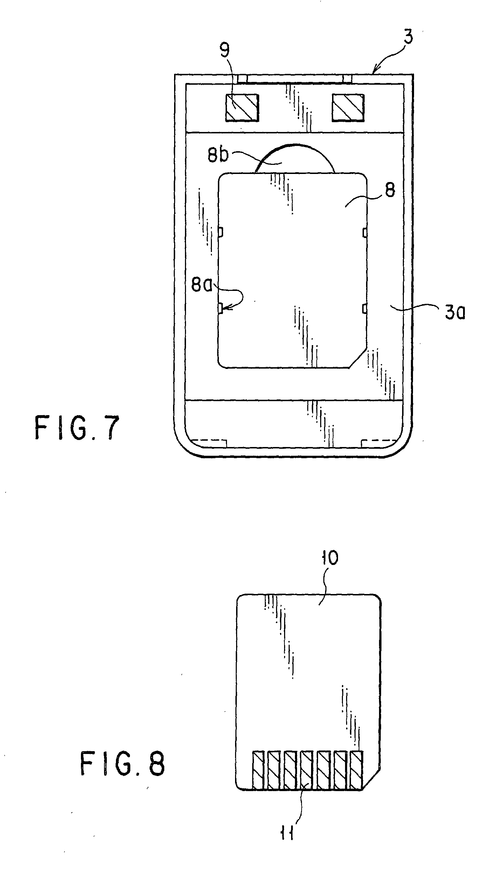

A plurality of connection terminals 6 for electrically connecting the card-shaped electronic device 10 shown in FIG. 8 to the device main body 1 and a pair of connection terminals 7 for electrically connecting the battery pack 3 to the device main body 1 are arranged on the inner surface 2a (first surface) of the pack receiving section 2 where the device main body 1 faces the battery pack 3. It will be appreciated from FIG. 4 that the connection terminals 7 are located remotely relative to the connection terminals 6 as viewed from the engaging sections 4. When the battery pack 3 is not placed in the pack receiving section 2 as shown in FIG. 5, the connection terminals 6, 7 are projecting from the inner surface 2a. On the other hand, when the battery pack 3 is placed in the pack receiving section 2 as shown in FIG. 6, the connection terminals 6, 7 are pushed into the device main body 1.

Meanwhile, a recessed card storage section 8 for storing the card-shaped electronic device 10 is formed on the inner surface 3a (second surface) of the battery pack 3 that faces the pack receiving section 2 of the device main body 1 as shown in FIG. 7. The card-shaped electronic device 10 stores data that may typically be audio data. More specifically, the card-shaped electronic device 10 is stored in the card storage section 8 with its connection terminals 11 exposed to the inner surface 3a of the battery pack 3 so that the connection terminals 11 of the card-shaped electronic device 10 may be connected to the connection terminals 6 of the device main body 1.

The card-shaped electronic device 10 is cut at a corner thereof so that the electronic device 10 may be correctly put into the card storage section 8. The card storage section 8 has a profile corresponding to that of the card-shaped electronic device 10. With these profile arrangements, the card-shaped electronic device 10 correctly can be put into the card storage section 8. The card storage section 8 is provided at the periphery thereof with a plurality of holding claws 8a for unreleasably holding the card-shaped electronic device 10 in the card storage section 8.

A pair of connection terminals 9 are arranged on the inner surface 3a of the battery pack 3 so that they may be electrically connected to the connection terminals 7 of the device main body 1 when the battery pack 3 is received in the pack receiving section 2 of the device main body 1.

The card storage section 8 of the battery pack 3 is provided with a recess 8b so that the card-shaped electronic device 10 may be taken out from the card storage section 8 with ease. More specifically, the user can easily take out the card-shaped electronic device 10 by putting one of his or her fingers into the recess 8b and forcing out the card-shaped electronic device 10.

The device main body 1 is additionally provided at a position close to the lower end thereof with a connector 14 to be connected to an external interface and at a position near the upper end thereof with a radio antenna 15.

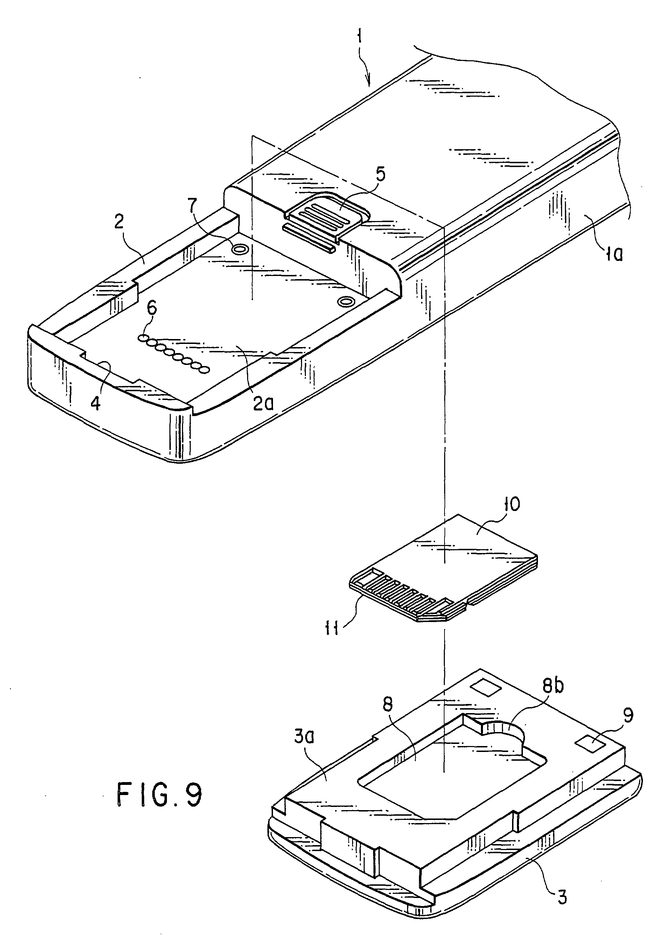

As shown in FIG. 9, the battery pack 3 is fitted into the pack receiving section 2 of the device main body 1 with a card-shaped electronic device 10 stored in the card storage section 8 that is formed on the inner surface 3a thereof. As the battery pack 3 is fitted into the pack receiving section 2, the inner surface 2a of the pack receiving section 2 substantially contacts the inner surface 3a of the battery pack 3, while the connection terminals 9 of the battery pack 3 contact the corresponding connection terminals 7 of the device main body 1 and the connection terminals 11 of the card-shaped electronic device 10 contact the corresponding connection terminals 6 of the device main body 1.

As a result, the battery pack 3 can supply power to the device main body 1 by way of the connection terminals 7, 9 and also from the device main body 1 to the card-shaped electronic device 10 by way of the connection terminals 6, 11. Then, the device main body 1 and the card-shaped electronic device 10 can exchange data between themselves.

With the above described embodiment where the connection terminals 7 of the device main body 1 are located close to the anchor claw 5 relative to the connection terminals 6, the electric connection between the connection terminals 7 and the connection terminals 9 is cut prior to the connection between the connection terminals 6 and the connection terminals 11 when the battery pack 3 is taken out of the pack receiving section 2 of the device main body 1. In other words, the electric connection between the device main body 1 and the battery pack 3 is reliably cut before the card-shaped electronic device 10 is electrically disconnected from the device main body 1 so that the data stored in the card-shaped electronic device 10 would not be inadvertently lost.

Furthermore, this embodiment does not require any slot for receiving a card-shaped electronic device nor a mechanism for driving a card-shaped electronic device into and out of the slot. The net result is a mobile telephone set that is small and light weight and has a simple configuration.

Additionally, since this embodiment does not require any slot for receiving a card-shaped electronic device unlike conventional devices, it is free from the problem of a worn connection terminal if the card-shaped electronic device is fitted to and removed from it repeatedly .

Still additionally, this embodiment in which a card-shaped electronic device 10 is fitted to the pack receiving section 2 located between the device main body 1 and the battery pack 3 is free from the problem of a fallen card-shaped electronic device and the resultant loss of stored data.

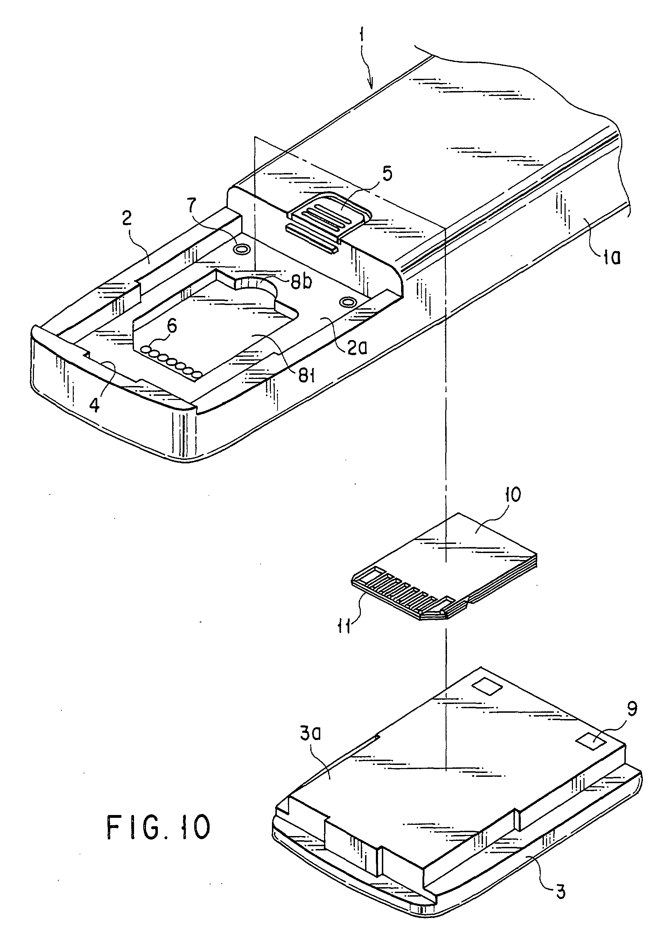

For instance, while the card storage section 8 is formed on the inner surface 3a of the-battery pack 3 of the above embodiment, such a card storage section 81 may alternatively be formed on the inner surface 2a of the pack receiving section 2 of the device main body 1 as shown in FIG. 10. This card storage section 81 has a profile obtained by turning the card storage section 8 upside down and is provided with connection terminals 6 at the bottom side thereof. With this modified embodiment, the card-shaped electronic device 10 is firstly fitted into the card storage section 81 formed in the device main body 1 and the connection terminals 6 and the connection terminals 11 are connected to each other before the battery pack 3 is fitted into the pack receiving section 2. It will be appreciated that this embodiment provides advantages same as those of the above described embodiment.

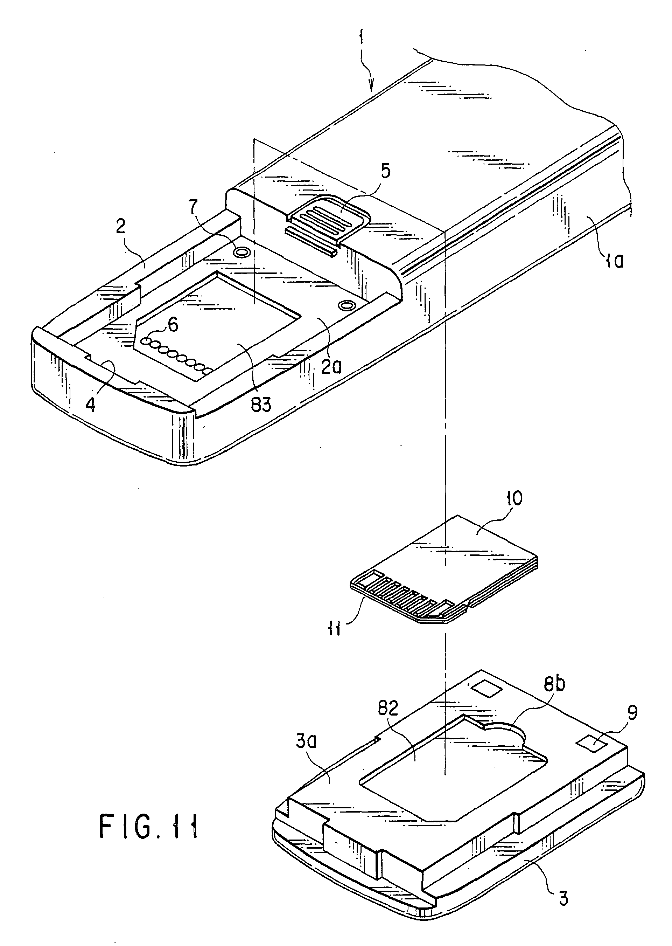

Still alternatively, relatively shallow card storage sections 82, 83 may be formed respectively on the inner surface 3a of the battery pack 3 and on the inner surface 2a of the pack receiving section 2 in a manner as shown in FIG. 11. Then, the sum of the depth of the card storage section 82 and that of the card storage section 83 is made substantially equal to the height of the card-shaped electronic device 10.

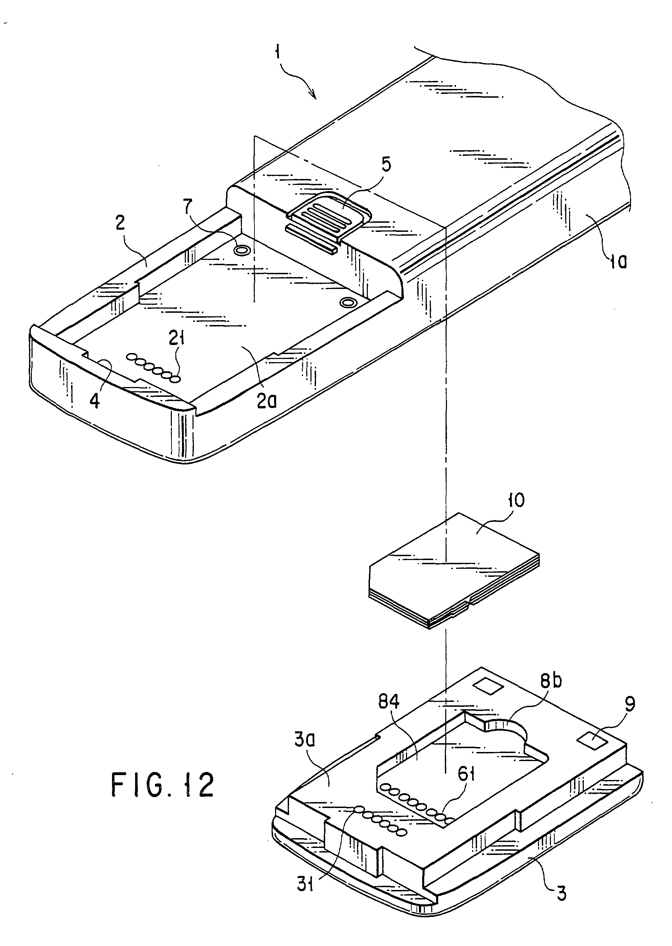

Still alternatively, it may be so arranged that a card storage section 84 is formed on the inner surface 3a of the battery pack 3 and connection terminals 61 to be electrically connected to the corresponding connection terminals 11 (not shown) of the card-shaped electronic device 10 are formed on the bottom section of the card storage section 84, while connection terminals 31, 21 for electrically connecting the battery pack 3 and the device main body 1 are formed respectively on the inner surface 3a of the battery pack 3 and on the inner surface 2a of the pack receiving section 2 in a manner as shown in FIG. 12.

With this arrangement, the card-shaped electronic device 10 is turned upside down and fitted into the card storage section 84 to electrically connect the connection terminals 11 of the card-shaped electronic device 10 and the corresponding connection terminals 61 of the battery pack 3 in order to supply power from the battery pack 3 to the card-shaped electronic device 10 so that the battery pack 3 and the card-shaped electronic device 10 can exchange data between them. Additionally, as the battery pack 3 is fitted to the pack receiving section 2 of the device main body 1 with the card-shaped electronic device 10 held therein, the connection terminals 7, 9 and the connection terminals 21, 31 are electrically connected to each other. As a result, power can be supplied from the battery pack 3 to the device main body 1 so that the card-shaped electronic device 10 and the device main body 1 can exchange data between them.

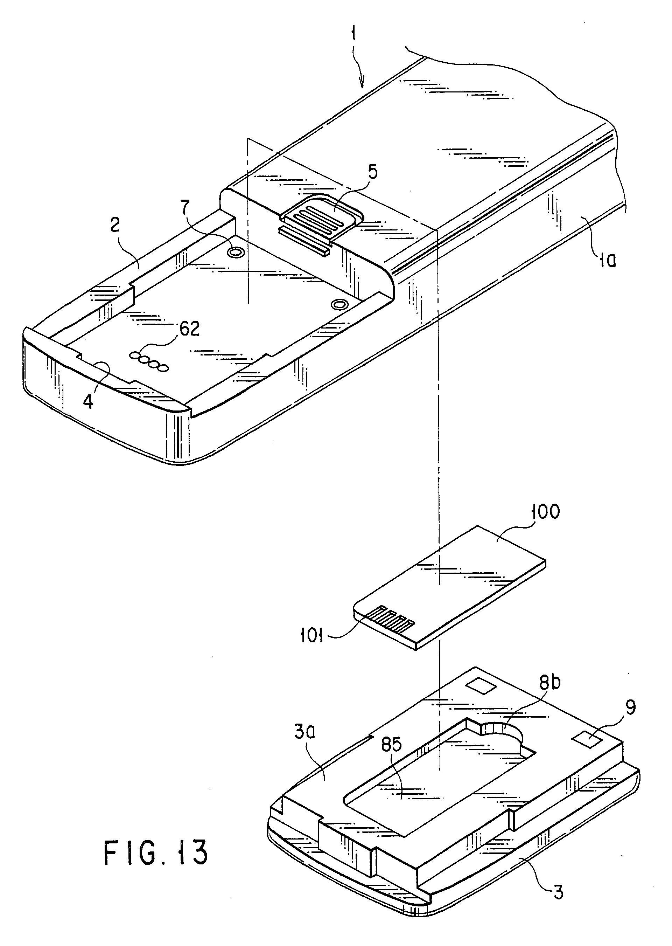

Furthermore, as shown in FIG. 13, a card-shaped electronic device 100 having a modified profile can be stored in the card storage section of the battery pack 3. For this arrangement, a card storage section 85 having a profile matching that of the card-shaped electronic device 100 is formed on the inner surface 3a of the battery pack 3 and connection terminals 62 to be electrically connected to the connection terminals 101 of the card-shaped electronic device 100 are formed on the inner surface 2a of the pack receiving section 2 of the device main body 1.

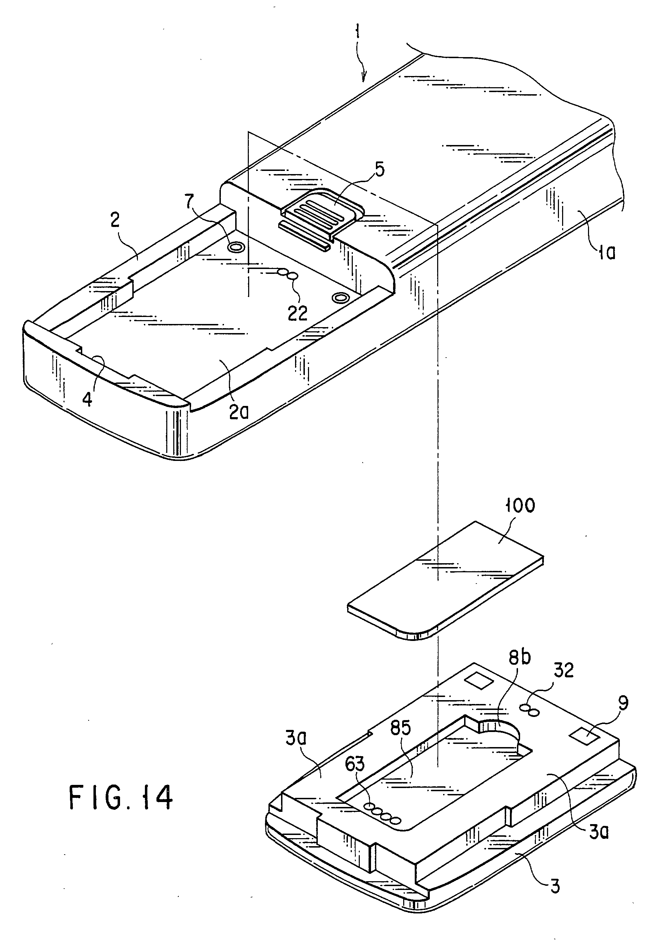

Still alternatively, as shown in FIG. 14, it may be so arranged that the card-shaped electronic device 100 is turned upside down before it is put into the card storage section 85 to electrically connect the connection terminals 101 (not shown) of the card-shaped electronic device 100 and the connection terminals 63 of the battery pack 3. Then, as described earlier by referring to FIG. 12, connection terminals 32 and connection terminals 22 are arranged respectively on the inner surface 3a of the battery pack 3 and on the inner surface 2a of the pack receiving section 2 to electrically connect the battery pack 3 and the pack receiving section 2.

Thus, as may be clear from the above descriptions made by referring to FIGS. 12 and 14, with the arrangement of providing the battery pack 3 with a card storage section having a profile adapted to that of the card-shaped electronic device to be stored therein and electrically connecting the card-shaped electronic device and the battery pack 3 and also the battery pack 3 and the device main body 1, the device can be used with various pieces of card-shaped electronic device simply by replacing the battery pack that is relatively less costly without structurally modifying the device main body 1. In short, when the user wants to use a different type of card-shaped electronic device with an information device according to the invention, he or she is simply required to replace the battery pack with a right one.

## Claims

1. An electronic device **characterized by** comprising:
a device main body (1) having a receiving section (2); and
an annex (3) removably fitted to said receiving section (2);
said electronic device being adapted to receive a card-shaped electronic device (10, 100);
at least the first surface (2a) of the receiving section (2) of said device main body (1) facing the annex (3) fitted to said receiving section (2) or the second surface (3a) of the annex (3) facing said first surface (2a) being provided with a recessed storage section (8, 81, 82, 83, 84, 85) for removably storing said card-shaped electronic device (10, 100).

2. The electronic device according to claim 1, **characterized in that**
the device main body (1) and the annex (3) are electrically connected to each other and the device main body (1) and the card-shaped electronic device (10, 100) are also electrically connected to each other by placing said card-shaped electronic device (10, 100) into said storage section (8, 81 - 85) and subsequently putting said annex (3) into said receiving section (2) of said device main body (1).

3. The electronic device according to claim 1, **characterized in that**
said storage section (81, 83) is formed on said first surface (2a).

4. The electronic device according to claim 1, **characterized in that**
said storage section (8, 82, 84, 85) is formed on said second surface (3a).

5. The electronic device according to claim 4, **characterized in that**
said annex (3) and said card-shaped electronic device (10, 100) are electrically connected by placing said card-shaped electronic device (10, 100) in said storage section (84, 85).

6. The electronic device according to claim 5, **characterized in that**
said first surface (2a) and said second surface (3a) are respectively provided with connection terminals (21, 31, 22, 32) that are adapted to electrically connect said card-shaped electronic device (10, 100) and said device main body (1) as said card-shaped electronic device (10, 100) is placed in said storage section (84, 85) and subsequently said annex (3) is put into said receiving section (2).

7. The electronic device according to claim 4, **characterized in that**
said storage section (8) is provided with an anchor claw (8a) for holding the card-shaped electronic device (10) placed in said storage section (8).

8. The electronic device according to claim 1, **characterized in that**
said storage section (82, 83) is formed both on said first surface (2a) and on said second surface (3a).

9. The electronic device according to claim 2, **characterized by** further comprising:
an engaging section (4) for engaging an end of said annex (3) with an end of said receiving section (2); and
an anchor claw (5) for rigidly anchoring the other end of the annex (3) to the other end of the receiving section (2) with said annex (3) turned around said engaging section (4) and fitted to said receiving section (2).

10. The electronic device according to claim 9, **characterized in that**
the connection terminals (7, 9) for connecting said device main body (1) and said annex (3) are located remotely from said engaging section (4) relative to the connection terminals (6, 11, 62, 101) for connecting the device main body (1) and said card-shaped electronic device (10, 100).

11. A portable information device **characterized by** comprising:
a device main body (1) adapted for radio communications and having a pack receiving section (2); and
a battery pack (3) removably fitted to said pack receiving section (2);
said portable information device being adapted to receive a card-shaped electronic device (10, 100);
at least the first surface (2a) of the pack receiving section (2) of said device main body (1) facing the battery pack (3) fitted to said pack receiving section (2) or the second surface (3a) of the battery pack (3) facing said first surface (2a) being provided with a recessed storage section (8, 81 - 85) for removably storing said card-shaped electronic device (10, 100).

12. The portable information device according to claim 11, **characterized in that**
the device main body (1) and the battery pack (3) are electrically connected to each other and the device main body (1) and the card-shaped electronic device (10, 100) are also electrically connected to each other by placing said card-shaped electronic device (10, 100) into said card storage section (8, 81 - 85) and subsequently putting said battery pack (3) into said pack receiving section (2) of said device main body (1).

13. The portable information device according to claim 11, **characterized in that**
said card storage section (81, 83) is formed on said first surface (2a).

14. The portable information device according to claim 11, **characterized in that**
said card storage section (8, 82, 84, 85) is formed on said second surface (3a).

15. The portable information device according to claim 14, **characterized in that**
said battery pack (3) and said card-shaped electronic device (10, 100) are electrically connected by placing said card-shaped electronic device (10, 100) in said card storage section (84, 85).

16. The portable information device according to claim 15, **characterized in that**
said first surface (2a) and said second surface (3a) are respectively provided with connection terminals (21, 31, 22, 32) that are adapted to electrically connect said card-shaped electronic device (10, 100) and said device main body (1) as said card-shaped electronic device (10, 100) is placed in said card storage section (84, 85) and subsequently said battery pack (3) is put into said pack receiving section (2).

17. The portable information device according to claim 14, **characterized in that**
said card storage section (8) is provided with an anchor claw (8a) for holding the card-shaped electronic device (10) placed in said card storage section (8).

18. The portable information device according to claim 11, **characterized in that**
said card storage section (82, 83) is formed both on said first surface (2a) and on said second surface (3a).

19. The portable information device according to claim 12, **characterized by** further comprising:
an engaging section (4) for engaging an end of said battery pack (3) with an end of said pack receiving section (2); and
an anchor claw (5) for rigidly anchoring the other end of the battery pack (3) to the other end of the pack receiving section (2) with said battery pack (3) turned around said engaging section (4) and fitted to said pack receiving section (2).

20. The portable information device according to claim 19, **characterized in that**
the connection terminals (7, 9) for connecting said device main body (1) and said battery pack (3) are located remotely from said engaging section (4) relative to the connection terminals (6, 11, 62, 101) for connecting the device main body (1) and said card-shaped electronic device (10, 100).
